Europäisches Patentamt

(19) European Patent Office

Office européen des brevets

(11) Publication number: **0 068 860**
**B1**

(12) **EUROPEAN PATENT SPECIFICATION**

(45) Date of publication of patent specification: **12.02.86**

(51) Int. Cl.⁴: **H 04 N 1/06,** H 04 N 1/036

(21) Application number: **82303354.3**

(22) Date of filing: **25.06.82**

(54) **Optical reader.**

(30) Priority: **26.06.81 JP 98362/81**
**09.09.81 JP 140854/81**
**10.09.81 JP 141646/81**

(43) Date of publication of application:
**05.01.83 Bulletin 83/01**

(45) Publication of the grant of the patent:
**12.02.86 Bulletin 86/07**

(84) Designated Contracting States:
**DE FR GB**

(56) References cited:
**CH-A- 322 686**
**DE-A-2 631 848**
**DE-B-2 748 266**
**GB-A-1 303 657**
**US-A-4 288 701**

**IBM TECHNICAL DISCLOSURE BULLETIN, vol.
22, no. 4, September 1979 "Transmissive
document sensor" pages 1585, 1586**

(73) Proprietor: **FUJITSU LIMITED**
**1015, Kamikodanaka Nakahara-ku**
**Kawasaki-shi Kanagawa 211 (JP)**

(72) Inventor: **Sato, Masuji**
**Fujitsu-haitsu 412 3-12-3, Miyamaedaira**
**Miyamae-ku**
**Kawasaki-shi Kanagawa 213 (JP)**
Inventor: **Naka, Toshiaki**
**1419-4, Tsuruma Machida-shi**
**Tokyo 194 (JP)**
Inventor: **Yamada, Fumiaki**
**Fujitsu-manshon 1-31 1550-30 Shimokurata-cho**
**Totsuka-ku Yokohama-shi Kanagawa 244 (JP)**

(74) Representative: **George, Sidney Arthur et al**
**GILL JENNINGS & EVERY 53-64 Chancery Lane**
**London WC2A 1HN (GB)**

## Description

This invention relates to an optical reader for use, for example, in a facsimile transmitter.

A facsimile transmitter is used to transmit an image of graphic material rapidly to a remote point. The image of the original material is changed into electrical signals which are sent by the transmitter to a facsimile receiver. The received signals are changed to an image of the original material at the receiver.

An optical reader is used to change the image of the original material into electrical signals. In a conventional optical reader, a light source for lighting the original material comprises arrays of green light-emitting diodes (LEDs) having a centre wavelength of 555 nm (nanometres) so that sufficient contrast of the original material can be obtained so as to distinguish clearly material printed in red. However, the luminous intensity of a green LED is weak. The length of one LED array and the number of LEDs contained therein correspond to the width of the original material. Two green LED arrays are necessary in order to light the original material with a luminous intensity sufficient for the photosensor to distinguish the original material. In addition, it is necessary to feed a high input current to the light source in order to enhance illumination of the original material. Therefore, excessive heat is generated in the LED arrays, and the photosensor is heated. As a result, the sensing ability of the sensor is degraded, due to an increase in the resistance-in-light of the sensor (i.e. the resistance of the sensor when light is impinging upon it), and drift of the output voltage thereof.

An object of the present invention is to alleviate the above-mentioned problems.

According to the invention there is provided an optical reader comprising at least one array of LEDs (light-emitting diodes) as a monochromatic light source for illuminating original material to be read; optical guide means for guiding light reflected from the original material; and an image sensor to which the reflected light is guided by the optical guide means and which converts the reflected light to electrical signals; characterised in that the monochromatic light source comprises at least one yellow LED array; and in that the electrical signals are binary signals for discriminating the marks or letters of various colours on the original material as black and for discriminating the background of the original material as white in accordance with whether or not the contrast between the reflected light from the marks or letters and the reflected light from the background is above a critical level.

Embodiments of the invention will now be described, by way of example, with reference to the accompanying drawings, in which:

Fig. 1 is a sectional view of the main part of an optical reader according to the present invention;

Fig. 2 is a graph showing reflection characteristics of different colours, relative to wavelength;

Fig. 3 is a graph showing contrast characteristics of different colours illuminated by yellow light, relative to LED input current;

Fig. 4 is a graph showing contrast characteristics of different colours illuminated by green light, relative to LED input current;

Fig. 5 is a graph showing characteristics of resistance of a photosensor receiving light of different colours, relative to input current;

Fig. 6 is a graph showing characteristics of luminous intensity of yellow and green LEDs relative to input current;

Fig. 7 is a graph showing contrast characteristics of different colours illuminated by a conventional light source, relative to input current;

Fig. 8(a) is a front view of an example of a light source of the present invention;

Fig. 8(b) is a side view of the light source of Fig. 8(a);

Fig. 9(a) is a front view of another example of a light source of the present invention;

Fig. 9(b) is a side view of the light source of Fig. 9(a),

Fig. 10 is a graph showing the contrast characteristics of different colours illuminated by a light source according to the present invention, relative to the input current,

Fig. 11 is a graph showing characteristics of the luminous intensity of green and yellow LEDs relative to wavelength,

Fig. 12 is a graph showing reflection characteristics of red, and of red of colour code No. 6055,

Fig. 13 is a graph showing contrast characteristics of red and green illuminated by a conventional light source, relative to input current,

Fig. 14 is a schematic view of another optical reader according to the present invention,

Fig. 15 is a graph showing the input current of a yellow LED as compared with the input current of a green LED for the same luminance as the yellow LED,

Fig. 16 is a graph showing contrast characteristics of different colours relative to input current,

Fig. 17 is a graph showing modulation transfer function (MTF) characteristics of different colours relative to the length (i.e. distance) between the original material and the detector,

Fig. 18 is a schematic view of another optical reader according to the present invention,

Fig. 19 is a schematic view of a further optical reader according to the present invention,

Fig. 20 is a graph showing transmission factors of various colour filters for use in the present invention,

Fig. 21 is a graph showing luminance characteristics of unfiltered light and of the filtered light of the present invention relative to the wavelength,

Fig. 22 is a graph showing characteristics of the resistance of the detector in unfiltered light and in light filtered through a green filter, and

Fig. 23 is a graph showing characteristics of the contrast of red and black colours to white paper relative to input current.

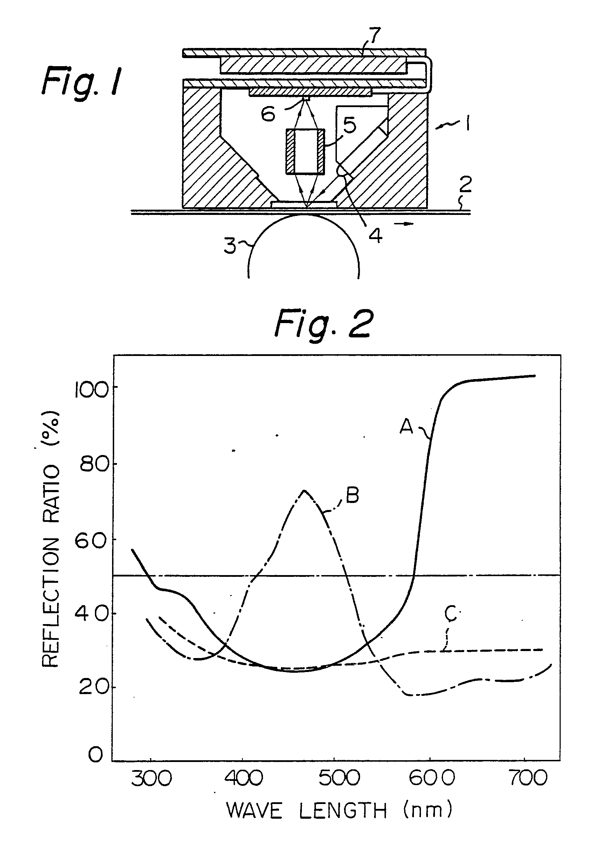

The main part of an optical reader in a facsimile transmitter is illustrated in Fig. 1. The image of the original material is changed to electrical signals by the optical reader. The optical reader comprises an image sensor unit 1 comprising a feed roller 3 for feeding a sheet 2 bearing the original material which is to be read. A light source 4 comprises an array of LEDs. An optical guide 5, comprising self-focusing glass fibres (marketed under the trade name of Selfoc Lens Array), guides light reflected from the sheet 2 to a photodetector 6 comprising an array of photoelectric transfer diodes. An actuating circuit 7 is provided for actuating the photodetector 6. The original material 2 is moved by the feed roller 3 towards the right, in the direction of the arrow, under the image sensor unit 1. During this movement, the original material 2 is illuminated by the light source 4, and the reflected light is guided to the photodetector 6 through the optical guide means 5. There, the light intensity is transformed to electrical signals.

The optical reader must discriminate material which is usually in black, red or blue on white paper. In order to ensure reliable detection of the printed or written material, black, red or blue colours should reflect substantially no light from the light source 4, whilst white paper should fully reflect the light from the light source. The reflection characteristics of various colours are depicted in the graph of Fig. 2. In Fig. 2, the abscissa represents the wavelength in nm (nanometers), the ordinate represents the reflection ratio (%), the solid line A represents the characteristic of reddish organe (colour code No. 6055 of Toyo Ink Co.), the dash-dot line B represents the characteristic of blue (colour code No. 6215), and the dotted line C represents the characteristic of black (colour code No. 6301). The optical reader judges the original material as being white if its reflection ratio is more than 50%, while it judges the original material as being black if its reflection ratio is less than 50% thereby creating a binary signal. When the original material is illuminated by an orange light having a centre wavelength of 605 nm, the original material in red (line A) is judged as being white since its reflection ratio in the orange light is more than 50%. Therefore, a source emitting light having a centre wavelength of more than about 600 nm cannot be used as the light source 4. When the original material is illuminated by yellow LEDs having a centre wavelength of 570 nm, or by green LEDs having a centre wavelength of 555 nm, each of the original materials in red, blue and black (lines A, B and C) is judged as being black. Therefore, a yellow LED or a green LED can be used as the light source 4. When the original material is illuminated by light having a centre wavelength of less than 510 nm, the original material coloured blue (line B) is judged as white. Therefore, this light cannot be used as the light source 4. The wavelength of the light for illuminating the original material should be between about 520 nm and 590 nm.

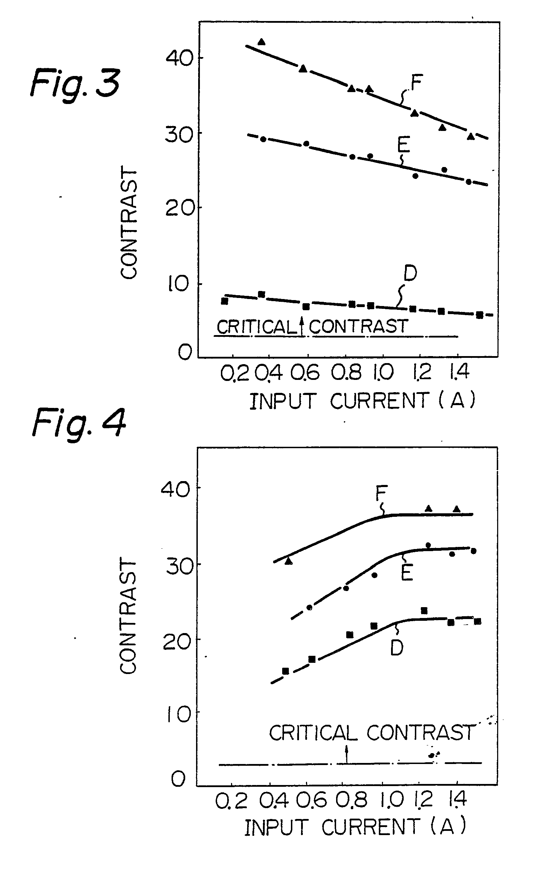

The contrast characteristic of different colours relative to the input current is graphically depicted in Figs. 3 and 4. In Fig. 3, the light source is a yellow LED array of 88 LEDs which emit light having a centre wavelength of 570 nm. In Fig. 4, the light source is a green LED array of 88 LEDs which emit light having a centre wavelength of 555 nm. In Figs. 3 and 4 the abscissa represents the input current, the ordinate represents the contrast of the original material, line D represents the contrast of red to white, line E represents the contrast of black to white, and line F represents the contrast of blue to white. In these figures the lines D, E and F are above the critical contrast level (about 3) for detecting the original material. Therefore, either yellow or green LEDs can be used as the light source, from the viewpoint of the contrast characteristics of the original material.

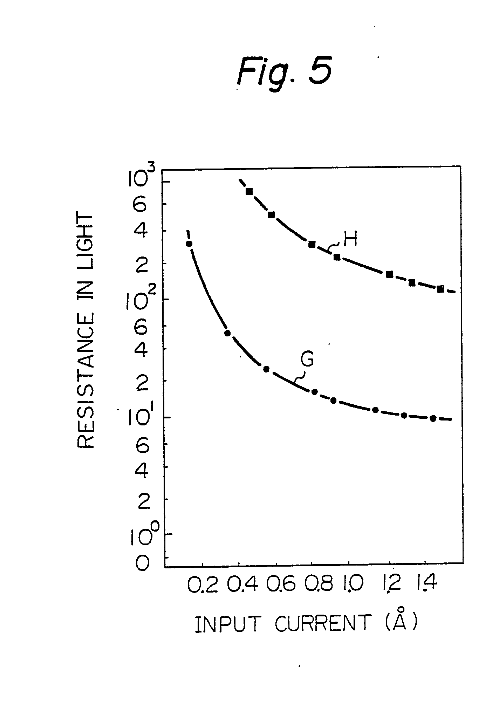

The photodetector 6 presents a different resistance characteristic when illuminated by a green light as compared with a yellow light, as shown in Fig. 5. In Fig. 5, the abscissa represents the input current fed to the light source, the ordinate represents the resistance-in-light of the photodetector, line G represents the resistance for light from a yellow LED having a centre wavelength of 570 nm, and line H represents the resistance for light from a green LED having a centre wavelength of 555 nm. As can be seen from the graph, the resistance of the photodetector 6 in yellow light is much less than in green light.

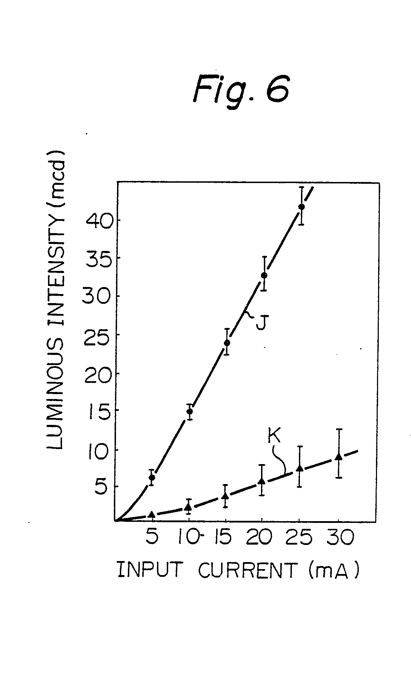

The luminous intensity of an LED is graphically depicted in Fig. 6. In Fig. 6, the abscissa represents the input current fed to the LED, the ordinate represents the luminous intensity of the LED, line J represents a yellow LED having a centre wavelength of 570 nm, and line K represents a green LED having a centre wavelength of 555 nm. As can be seen from the graph, the luminous intensity of the yellow LED is more than five times the luminous intensity of the green LED at the same input current.

The present invention was made considering the above-mentioned data. The optical reader of the present invention has as its light source a yellow LED array having a centre wavelength of 570 nm and a half width of 30 μm.

The advantages of using yellow LEDs are as follows. A single LED array is sufficient as the light source, due to the high luminous intensity of yellow LEDs, whilst two green LED arrays are required in the optical reader of the prior art. Therefore, assembly and adjustment of the light source can be easily carried out, and labour costs, as well as the cost of the parts, can be decreased. The power consumption is decreased to about one third that of conventional green LEDs and the generation of heat is therefore decreased, whereby degradation of the photodetector or image sensor, such as weakening of the luminous intensity or lowering of the output power thereof, is avoided.

As mentioned above, the inventors have proposed to utilise as the light source a yellow LED array having a centre wavelength of 560 ～ 580 nm, resulting in a simple construction, low cost, and low consumption of power. LEDs, such as a yellow LED having a 570 nm wavelength and a green LED having a 555 nm wavelength, are on the market. As is graphically depicted in Fig. 6, the luminous intensity of such a yellow LED (line J) is more than five times the luminous intensity of a green LED (line K). The necessary input current fed to a yellow LED in order to obtain the same luminous intensity as that of a green LED is about one fifth the input current of the green LED. Therefore, the consumption of power of a yellow LED is much less than that of a green LED.

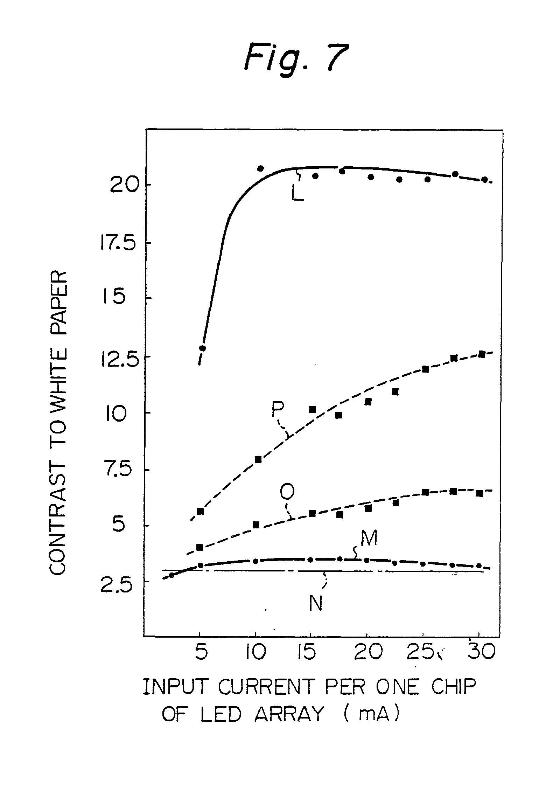

The resistance-in-light of a photodetector made of cadmium selenium (CdSe) is graphically illustrated in Fig. 5. The resistance of the photodetector illuminated by the light of a yellow LED (line G) is lower than the resistance in the light of a green LED (line H). Therefore, yellow is superior to other colours as the colour of the light source. However, it has drawbacks regarding the contrast of red, i.e. the contrast defined by the output of white paper/output of red original material = resistance-in-light (red original)/resistance-in-light (white paper). The contrast of red in the light of yellow LEDs is small, causing incorrect detection of the original material since the margin of the detector output for making a binary signal is small. This is especially a problem in discriminating a stamp of reddish orange or a bright red colour near orange. The contrast of the original material to white paper is determined by dividing the resistance-in-light of the photodetector in the light reflected by the original material by the resistance-in-light of the photodetector in the light reflected by the white paper. Such contrast of the original material to the white paper relative to the input current to one chip of the LED array of the light source is illustrated in Fig. 7. Line L represents the contrast of black (colour code No. 6301 of Toyo Ink. Co.) in yellow light, line M represents the contrast of red near orange (colour code No. 6055) in yellow light, line 0 represents the contrast of the red of line M in green light, and line P represents the contrast of black in green light. As can be seen from the graph, in yellow light the contrast of black (line L) is large enough (about 20) to enable detection of the original material. However, the contrast of red (line M) is only slightly above the critical level (line N). Thus, the margin of contrast is small. The contrast of red in green light (line O) is larger than that in yellow light (line M), since green is a complementary colour of red. However, the resistance-in-light of the photodetector in green light is large, as can be seen from Fig. 5. Therefore, in a light source comprising green LEDs, two arrays of LEDs, means for increasing the input current and heat radiation means are necessary in order to lower the resistance-in-light of the photodetector. The contrast of black in green light (line P) is large enough to enable detection of the original material, although it is inferior to that in yellow light (line L).

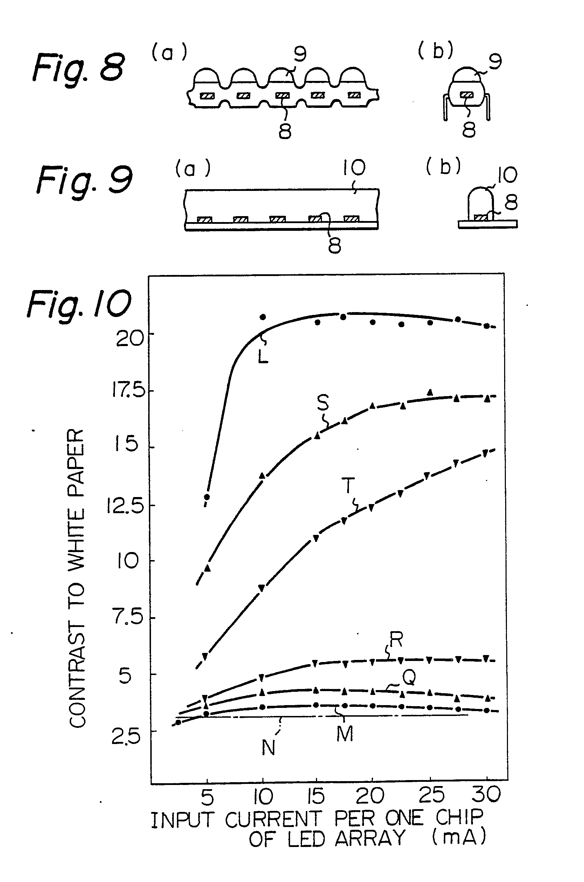

An embodiment of the present invention alleviates the above-mentioned low contrast of red in yellow light. An LED array according to the present invention is illustrated in Fig. 8. This array comprises a plurality of yellow LED chips 8, each of which is provided with a dome 9 of green or yellow transparent material. Another example of the LED array is illustrated in Fig. 9(a). This array comprises a continuous cover 10 of green or yellow transparent material disposed over the row of chips 8, instead of the domes 9 of Fig. 8.

The contrast characteristics of red and black to white paper in the light from the above-mentioned LED array according to the present invention are graphically depicted in Fig. 10. The abscissa represents the input current for each chip of the LED array, the ordinate represents the contrast to white paper, line Q represents the contrast of the original red material in the light from the light source comprising the yellow domes, line R represents the contrast of the original red material in the light from the light source comprising the green domes, line S represents the contrast of the original black material in the light from the light source comprising the yellow domes, line T represents the contrast of the original black material in the light from the light source comprising the green domes, line L represents the contrast of the original black material in the light from the light source comprising domes of completely transparent material, line M represents the contrast of the original red material illuminated by the light source comprising domes of completely transparent material, and line N represents the critical contrast level.

As can be seen from the graph, the contrast of red illuminated by the light source provided with domes of yellow or green (line O or R) was increased as compared with the contrast of red illuminated by the light source provided with completely transparent domes (line M).

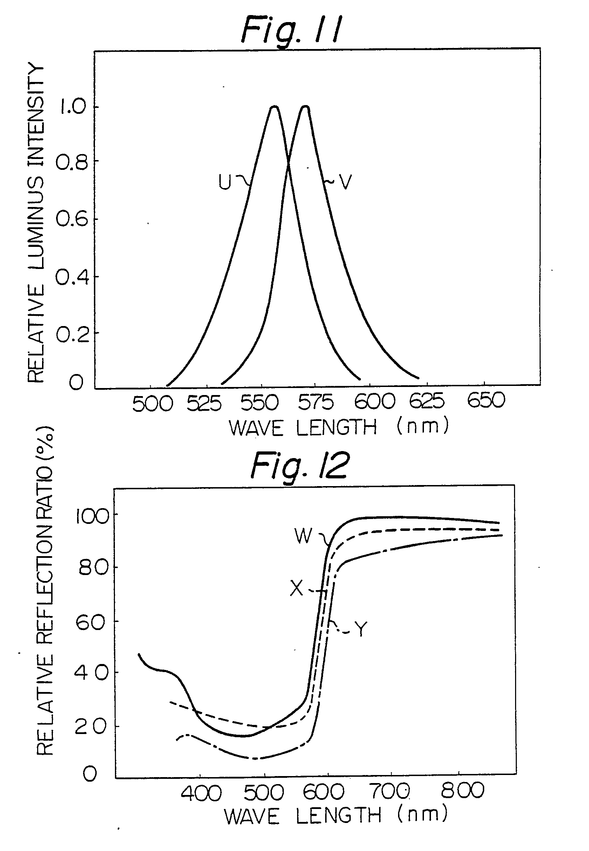

The reason for this increase in contrast is as follows. The luminous intensity of the LED relative to the wavelength is represented in Fig. 11. Line U represents the light of a green LED and line V represents the light of a yellow LED. The green light (line U) contains about 20% of a reddish light component having a wavelength of more than 580 nm, which component degrades the contrast of red. The yellow light (line V) contains about 60% of such reddish light component. The yellow dome removes such reddish light component so that the contrast of red is enhanced. The luminous intensity of the yellow light after the removal of 60% of the reddish light component is still large enough to enable detection of the original material, since the luminous intensity of the yellow light is primarily very large, as was mentioned with reference to Fig. 6.

The contrast of black to white paper in the light transmitted through either the yellow dome or the green dome (lines S and T) is sufficiently above the critical level (line N), as represented in Fig. 10.

The reflection ratio of various red colours is graphically represented in Fig. 12. A line W represents the red of colour code No. 6055, a line X represents a reddish orange stamp colour, and line Y represents a red colour. The line W rises at a wavelength smaller than the wavelength at which the line X or Y rises. This means that the red of the colour code No. 6055 is the least detectable reddish colour when the characteristics of the LED of Fig. 11 are considered. The present invention makes possible enhancement of the contrast of this latter red colour, as illustrated in Fig. 10.

As mentioned above, in an embodiment of the present invention, a yellow or green transparent dome or cover is provided over each of the yellow LEDs of the light source so that the contrast of red is enhanced and the reliability of detection is upgraded.

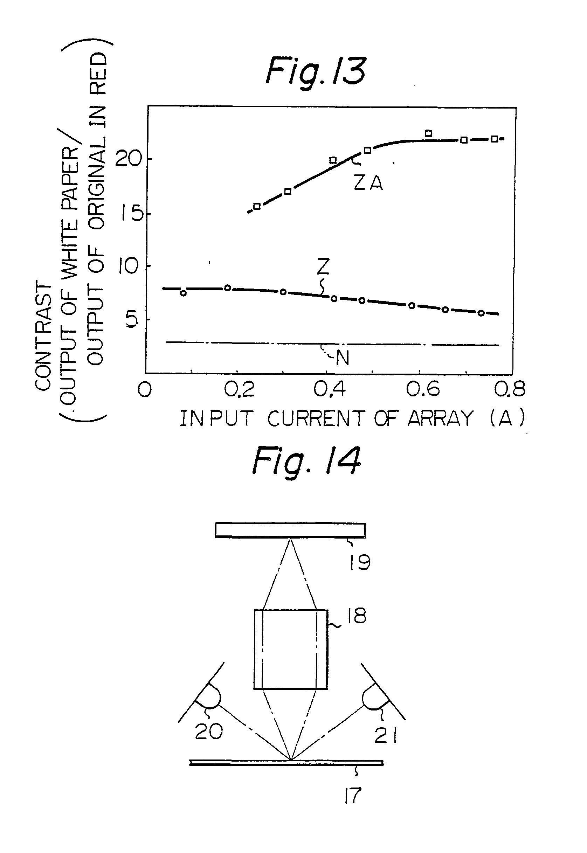

Yellow light has advantageous points as a light source for illuminating the original material, as was mentioned hereinbefore. However, it has the following drawbacks. As graphically depicted in Fig. 13, the contrast of red to white paper in yellow light (line Z) is smaller than the contrast of red in green light (line ZA). The margin of contrast of red in yellow light is small since the contrast of the line Z is only slightly over the critical level (line N) as compared with the contrast of line ZA. Such a small margin of contrast causes instability in the characteristic of the photodetector when the ambient temperature changes, and causes incorrect detection of the original material due to the low contrast.

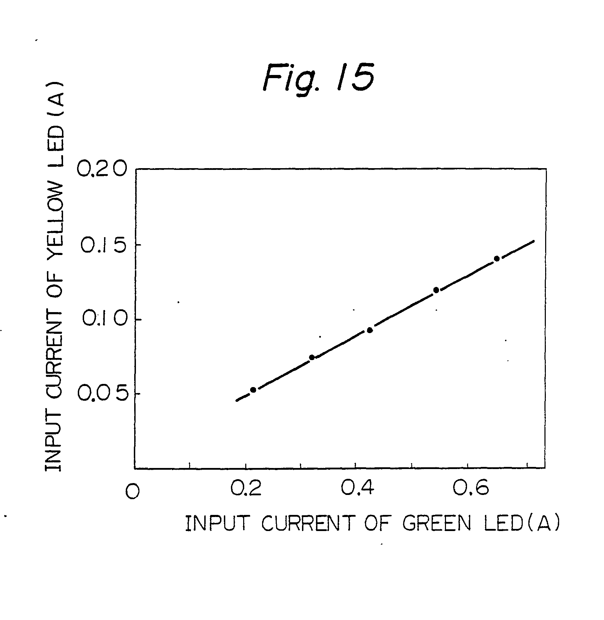

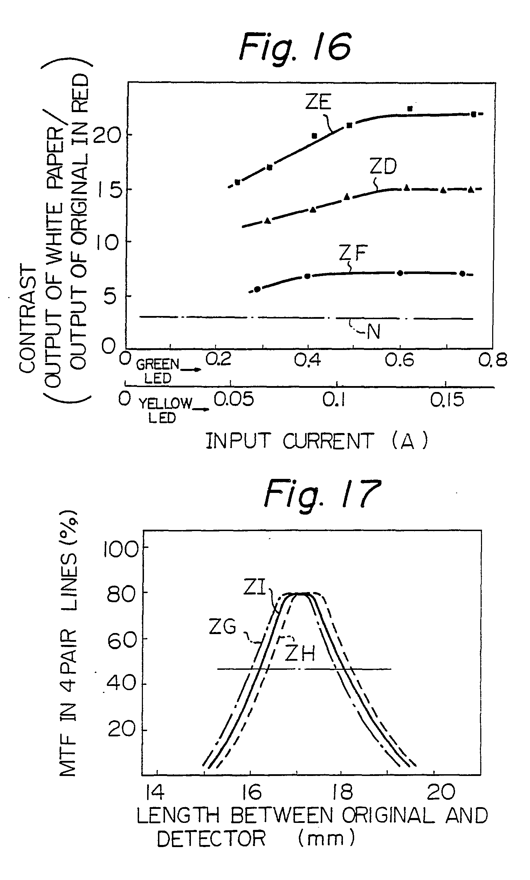

An embodiment of the present invention alleviates this problem. An example of the construction of an optical reader according to the present invention is illustrated in Fig. 14. Original material 17, a Selfoc lens 18, a photodetector array 19, and two LED arrays 20 and 21 are illustrated. One of the arrays 20, which is disposed in one side of the lens 18, comprises green LEDs having a centre wavelength of 555 nm. The other array 21, which is disposed at the other side of the lens 18, comprises yellow LEDs having a centre wavelength of 570 nm. The input current fed to these LED arrays 20 and 21 is adjusted so that illumination intensity of the yellow LED array is equal to or slightly larger than that of the green LED array. Both of the LED arrays 20 and 21 simultaneously illuminate the original material 17. The relationship between the input current of the yellow LED and the input current of the green LED is depicted in Fig. 15, both LEDs producing light of the same luminous intensity. The contrast of red to white in the light of the above-mentioned two LED arrays of the same luminous intensity is represented by line ZD in Fig. 16. The line ZD is sufficiently above the critical line N as compared with the line ZF, which represents the contrast of red in the light from the yellow LED array only. Therefore, although the consumption of power is increased as compared with the case of the line ZF, the margin of contrast is largely widened so that the stability of detection is upgraded when the ambient temperature changes. The contrast of the line ZD is lowered as compared with that of the line ZE, which represents the contrast of red in the light of the green LED array only. However, the line ZD is sufficiently above the critical level N so that reliable detection of the original material can be achieved.

The length (distance) between the original material and the photodetector is considered hereinafter from the viewpoint of MTF which corresponds to the discriminating power of the photodetector. The graph of Fig. 17 represents the MTF for four pair lines relative to the distance between the original material and the photodetector. A Selfoc lens having a 16.7 mm focus was used as the optical guide means. A line ZG represents green light having a 555 nm wavelength, a line ZH represents yellow light having a 570 nm wavelength, and a line ZI represents simultaneous lighting by green and yellow LEDs. An MTF of more than 50% is necessary to obtain reliable discrimination of the original material. As can be seen from the graph, each line has more than ±1 mm of range of distance between the original material and the photodetector at an MTF of 50% and the difference between the lines is small. Therefore, the distance between the original material and the photodetector in the case where green and yellow LED arrays are used simultaneous is almost the same as the distance in the case where a green LED array only is used. Therefore it is unnecessary to change the size of the conventional construction when using green and yellow LEDs simultaneously.

As mentioned above, in an embodiment of the present invention, by using a green LED array in addition to a yellow LED array, it is possible to increase the margin of contrast of red to white so that the reliability of detection of the optical reader is upgraded.

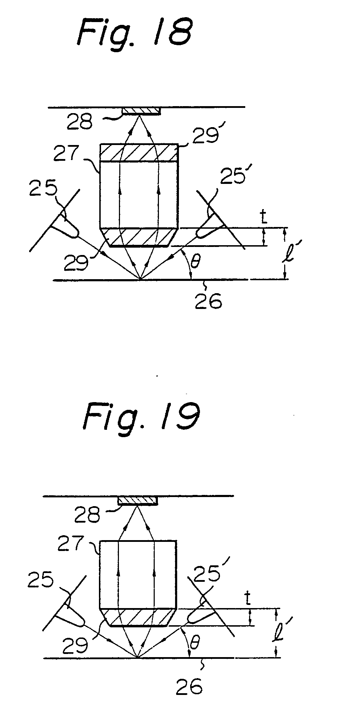

Another example of the optical reader according to the present invention is illustrated in Fig. 18. This optical reader comprises light sources 25 and 25', optical guide means 27, a photodetector 28, and colour filters 29 and 29'. Light from the light sources 25 and 25' is reflected by original material 26 and passes through the colour filter 29, the optical guide means 27, and the other colour filter 29', and is then detected by the photo-detector 28, which produces an image of the original material 26. The characteristics of the light sources 25 and 25' and the colour filters 29 and 29' will be described later.

A variation of the above optical reader is illustrated in Fig. 19. Like parts as in Fig. 18 are referred to by like numerals. The construction of Fig. 19 differs from the construction of Fig. 18 in that it comprises only one colour filter 29 at the front end of the optical guide means 27 instead of comprising two filters at opposite ends of the guide means.

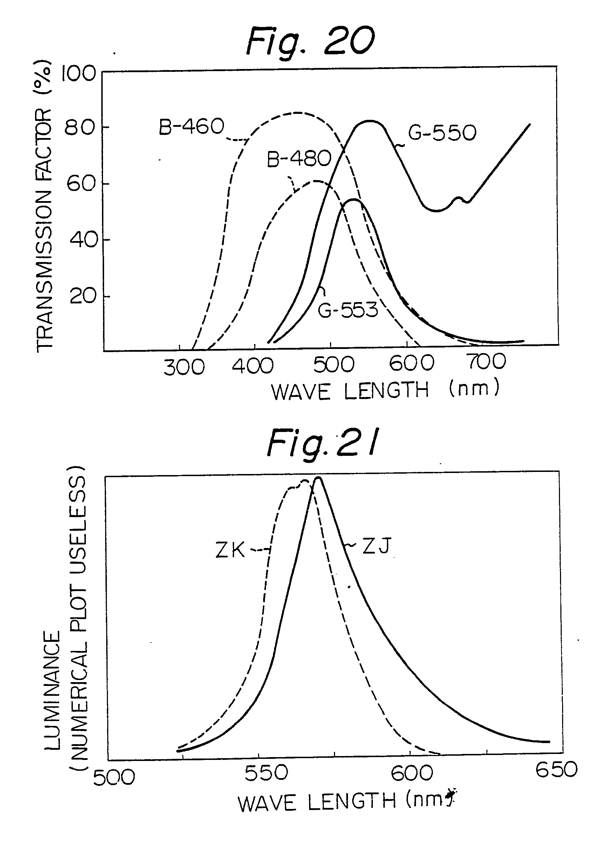

The characteristic of the transfer factor of the abovementioned colour filter relative to wavelength is graphically depicted in Fig. 20. Lines B-460 and B-480 represent the characteristics of blue filters, and lines G-550 and G-533 represent the characteristics of green filters.

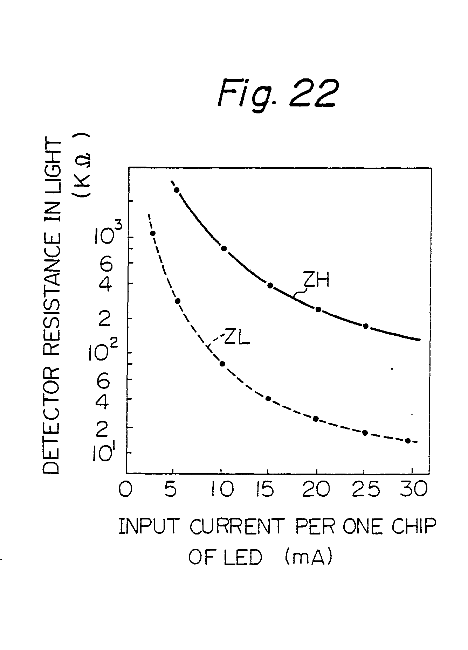

The characteristic of the light from the light sources of the present invention is graphically depicted in Fig. 21. A line ZJ represents the luminance characteristic of a yellow LED relative to wavelength, and a line ZK represents the luminance characteristic of the light of a yellow LED filtered through a green filter reflected by fine paper. As can be seen from the line ZK, the luminance of the light filtered through the green filter is decreased at the portion of the long wavelength near red.

The detector resistance-in-light relative to the input current for each chip of the LED array is graphically depicted in Fig. 22 so as to compare a light source without a colour filter with a light source with a colour filter. A line ZL represents the case of a conventional light source without a colour filter, and a line ZH represents the case of a light source with a green filter according to an embodiment of the present invention. The photodetector comprises a photoconductive CdSe chip. The original material is a fine paper.

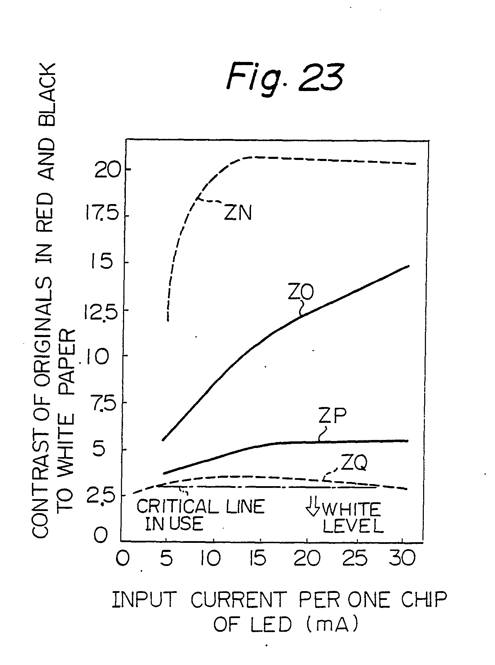

The contrast characteristics of red (colour code No. 6055) and black (colour code No. 6301) to white paper are graphically depicted in Fig. 23. A line ZN represents black in unfiltered light, a line ZO represents black in light filtered through the green filter, a line ZP represents red in light filtered through a green filter, and a line ZQ represents red in an unfiltered light.

As previously described with reference to Fig. 21, light filtered through a green filter shifts towards the short wavelength direction because light components above 590 nm are attenuated. This results in a decrease in luminous intensity, which causes an increase in the resistance-in-light as depicted in Fig. 22. Therefore, a large input current is required so as to maintain the reliability of the detector. However, in spite of such a disadvantage, the present invention has an advantage in practical use of the optical reader in that the contrast of red is increased as depicted in Fig. 23, which makes it possible to distinguish reliably graphic material printed in red near orange (colour code No. 6055), which shade of red is the most difficult to discriminate.

The present invention has another advantageous feature as follows. The distance l' (Fig. 18 or 19) between the original material 26 and the optical guide means 27 is defined as follows.

$$l' = l + t(1 - \frac{1}{n})$$

wherein l' is the distance between the original material and the optical guide means of the prior art not provided with a colour filter, and n is the index of refraction of the filter.

The value of l' is larger than l, since n is usually 1.5 ~ 1.7. Therefore, it is possible to widen the angle of incidence θ so that the light from the light source is effectively used, because the reflected light component in the direction perpendicular to the original material increases.

## Claims

1. An optical reader comprising at least one array of LEDs (light-emitting diodes) (4) as a monochromatic light source for illuminating original material (2) to be read; optical guide means (5) for guiding light reflected from the original material; and an image sensor (6) to which the reflected light is guided by the optical guide means and which converts the reflected light to electrical signals; characterised in that the monochromatic light source (4) comprises at least one yellow LED array; and in that the electrical signals are binary signals for discriminating the marks or letters of various colours on the original material as black and for discriminating the background of the original material as white in accordance with whether or not the contrast between the reflected light from the marks or letters and the reflected light from the background is above a critical level.

2. An optical reader according to claim 1, characterised in that LEDs having a 560 ~ 580 nm centre wavelength are used as the yellow LED array (4).

3. An optical reader according to claim 1 or claim 2, characterised in that each chip (8) of the yellow LED array is covered by a dome (9) of yellow or green transparent material.

4. An optical reader according to claim 1 or claim 2, characterised in that the yellow LED array (8) is covered by a continuous cover (10) of yellow or green transparent material.

5. An optical reader according to any preceding claim, characterised in that the light source comprises a green LED array (20) in addition to a yellow LED array (21).

6. An optical reader according to claim 1 or claim 2, characterised in that the optical guide means (5) is provided with at least one green or blue filter (29, 29') for attenuating light having a wavelength of more than 590 nm.

## Revendications

1. Lecteur optique comprenant au moins un réseau de diodes électroluminescentes (LED) (4) comme source de lumière monochromatique pour éclairer une matière originale (2) à lire; un moyen de guidage optique (5) pour guider la lumière réfléchie par la matière originale; et un senseur ou détecteur d'image (6) vers lequel est guidée la lumière réfléchie par le moyen de guidage optique et qui convertit la lumière réfléchie en signaux électriques; caractérisé en ce que la source de lumière monochromatique (4) comprend au moins un réseau de diodes LED à lumière jaune; et en ce que les signaux électriques sont des signaux binaires pour discriminer les repères ou les lettres de différentes couleurs sur la matière originale comme du noir et pour discriminer le fond de la matière originale comme du blanc selon que le contraste entre la lumière réfléchie par les repères cu letters et la lumière réfléchie par le fond est ou non au-dessus d'un niveau critique.

2. Lecteur optique selon la revendication 1, caractérisé en ce que les diodes LED ayant une longueur d'onde centrale de 560 ~ 580 nm sont utilisées pour le réseau de diodes LED à lumière jaune (4).

3. Lecteur optique selon l'une quelconque des revendications 1 et 2, caractérisé en ce que chaque pastille (8) du réseau de diodes LED à lumière jaune est recouverte d'un dôme (9) d'une matière transparente en jaune ou vert.

4. Lecteur optique selon l'une quelconque des revendications 1 et 2, caractérisé en ce que le réseau de diodes LED à lumière jaune (8) est recouvert d'un revêtement continu (10) d'une matière transparente en jaune ou vert.

5. Lecteur optique selon l'une quelconque des revendications 1 à 4, caractérisé en ce que la source lumineuse comprend un réseau de diodes LED à lumière verte (20) en plus d'un réseau de diodes LED à lumière jaune (21).

6. Lecteur optique selon l'une quelconque des revendications 1 et 2, caractérisé en ce que le moyen de guidage optique (5) est pourvu d'au moins un filtre vert ou bleu (29, 29') pour atténuer la lumière ayant une longueur d'onde supérieure à 590 nm.

### Patentansprüche

1. Optische Lesevorrichtung mit wenigstens einer Anordnung von LEDs (Leuchtdioden) (4) als monochromatische Lichtquelle zur Beleuchtung ursprünglichen Materials (2), welches gelesen werden soll; optischen Führungseinrichtungen (5) zur Führung des von dem ursprünglichen Material reflektierten Lichtes; und einem Bildsensor (6), zu welchem das reflektierte Licht durch die optischen Führungseinrichtungen geführt wird und welcher das reflektierte Licht in elektrische Signale umwandelt; dadurch gekennzeichnet, daß die monochromatische Lichtquelle (4) wenigstens eine gelbe LED-Anordnung umfaßt; und daß die elektrischen Signale binäre Signale zur Unterscheidung der Marken oder Buchstaben von verschiedenen Farben auf dem ursprünglichen Material, wie schwarz, und zur Unterscheidung des Hintergrunds des ursprünglichen Materials, wie weiß, sind, in Übereinstimmung damit ob der Kontrast zwischen dem von den Marken oder Buchstaben reflektierten Licht und dem von dem Hintergrund reflektierten Licht oberhalb eines kritischen Pegels liegt, oder nicht.

2. Optische Lesevorrichtung nach Anspruch 1, dadurch gekennzeichnet, daß LEDs, die eine zentrale Wellenlänge von 560 ~ 580 nm haben, als die gelbe LED-Anordnung (4) verwendet werden.

3. Optische Lesevorrichtung nach Anspruch 1 oder 2, dadurch gekennzeichnet, daß jedes Chip (8) der gelben LED-Anordnung durch einen Dom (9) aus gelbem oder grünem transparenten Material bedeckt ist.

4. Optische Lesevorrichtung nach Anspruch 1 oder 2, dadurch gekennzeichnet, daß die gelbe LED-Anordnung von einer kontinuierlichen Abdeckung (10) aus gelbem oder grünem transparenten Material abgedeckt ist.

5. Optische Lesevorrichtung nach einem der vorhergehenden Ansprüche, dadurch gekennzeichnet, daß die Lichtquelle zusätzlich zu der gelben LED-Anordnung (21) eine grüne LED-Anordnung (20) umfaßt.

6. Optische Lesevorrichtung nach Anspruch 1 oder 2, dadurch gekennzeichnet, daß die optische Führungseinrichtung (5) wenigstens ein grünes oder blaues Filter (29, 29') zur Dämpfung des Lichtes aufweist, das eine Wellenlänge von mehr als 590 nm aufweist.

*Fig. I*

*Fig. 2*

REFLECTION RATIO (%)

WAVE LENGTH (nm)

# 0 068 860

**Fig. 3**

**Fig. 4**

# Fig. 5

# Fig. 6

0 068 860

# Fig. 7

CONTRAST TO WHITE PAPER

INPUT CURRENT PER ONE CHIP
OF LED ARRAY ( mA )

**Fig. 8**

(a) 9 8

(b) 9 8

**Fig. 9**

(a) 10 8

(b) 10 8

**Fig. 10**

CONTRAST TO WHITE PAPER

20
17.5
15
12.5
10
7.5
5
2.5

L
S
T
R
Q
N
M

5   10   15   20   25   30

INPUT CURRENT PER ONE CHIP
OF LED ARRAY (mA)

## Fig. 11

## Fig. 12

## Fig.13

## Fig. 14

## Fig. 15

INPUT CURRENT OF YELLOW LED (A) vs INPUT CURRENT OF GREEN LED (A)

# Fig. 16

# Fig. 17

## Fig. 18

## Fig. 19

## Fig. 20

## Fig. 21

# Fig. 22

# Fig. 23